# EUROPÄISCHE PATENTANMELDUNG

(11) **EP 1 820 592 A2**
(43) Veröffentlichungstag der Anmeldung: **22.08.2007**
(21) Anmeldenummer: 07101723.0
(22) Anmeldetag: 05.02.2007
(51) Int. Cl.: B23G 1/34

(54) **Vorrichtung zur zerspanenden Herstellung von gewindeartigen Profilen**

(30) Priorität: 21.02.2006 DE 202006002877 U
(71) Anmelder: Burgsmüller GmbH, 37547 Kreiensen (DE)
(72) Erfinder: BLÄSCHE, Eckehard, 37547, Kreiensen (DE)
(74) Vertreter: Zollner, Richard

(57) **Zusammenfassung**

Die vorliegende Erfindung betrifft eine Vorrichtung zur zerspanenden Herstellung gewindeartiger Profile in der Innenfläche (16) eines Werkstücks (7).

Erfindungsgemäß wird vorgeschlagen, zur Herstellung mehrgängiger gewindeartiger Profile in der zu zerspanenden Oberfläche die Drehzahlen und Drehwinkel des Werkstücks (7) um die Achse (11) sowie des Zerspanungswerkzeugs (19) um die Achse (18) zu synchronisieren, so dass bei jeder Umdrehung des Werkstücks (7) der Eingriff des Zerspanungswerkzeugs (19) mit der genannten Oberfläche in Abhängigkeit von der Gangzahl des herzustellenden Profils nach Maßgabe solcher Drehwinkellagen und Häufigkeit nacheinander teilungsgenau eingerichtet ist, und dass - entlang der Achse (11) des Werkstücks (7) gesehen - die Herstellung wenigstens eines Teiles der Gänge des Profils kontinuierlich erfolgt.

## Beschreibung

Die Erfindung bezieht sich auf eine Vorrichtung entsprechend dem Oberbegriff des Anspruchs 1.

Das Verfahren des Gewindewirbelns ist in unterschiedlichen Formen zur Herstellung gewindeartiger Profile allgemein bekannt, und zwar sowohl von Außen- als auch von Innenprofilen. Charakteristisch für dieses Verfahren ist ein gleich- oder gegenläufig zu einem zu bearbeitenden Werkstück exzentrisch umlaufendes Zerspanungswerkzeug, welches lediglich entlang eines Teiles seiner Umlaufbahn in einen Eingriff mit dem Werkstück gelangt, so dass der verbleibende Teil der Umlaufbahn zur Kühlung zur Verfügung steht. Zur Darstellung der Steigung des Profils kann die Umlaufebene des Werkzeugs gegenüber der Achse des Werkstücks geneigt angeordnet sein. Alternativ hierzu kann die Umlaufebene senkrecht zur Achse des Werkstücks angeordnet sein, wobei die Steigung durch eine der kreisenden Werkzeugbewegung überlagerte, in Achsrichtung des Werkstücks angelegte Hubbewegung dargestellt wird. Dieses insbesondere bei der Herstellung von Innengewinden benutzte, auch als "Innen-Hub-Wirbeln" bekannte Verfahren ist in gleicher Weise wie andere Wirbelverfahren durch hohe Schnittgeschwindigkeiten und eine hohe Oberflächengüte des Profils gekennzeichnet.

Es ist im Hause der Anmelderin bekannt, die Herstellung mehrgängiger Innengewinde unter Anwendung des Wirbelverfahrens derart durchzuführen, dass die einzelnen Gewindegänge nacheinander hergestellt werden. Dies bedeutet, dass nach Vollendung jeweils eines Gewindeganges das Zerspanungswerkzeug des Wirbelaggregats für jeden weiteren Gang erneut in eine Ausgangsposition gebracht und ausgerichtet werden muss, woraus sich zusätzliche Positionierzeiten und ein ungünstiger Einfluss auf die für das vollständige Profil aufzuwendenden Fertigungszeiten ergeben. Probleme können bei dieser Vorgehensweise auch dadurch entstehen, dass die Herstellung der einzelnen Gänge nicht unter gleichen Temperaturbedingungen des Werkstücks erfolgt, ein Umstand, der zu Geometrieungenauigkeiten führen kann.

Bei der Anwendung dieses Verfahrens zur Herstellung von Innengewinden ergeben sich dann, wenn die Darstellung der Steigung dadurch bewirkt wird, dass die Umlaufebene des Zerspanungswerkzeugs gegenüber der Werkstückachse verschwenkt wird, geometrische Beschränkungen, und zwar in Abhängigkeit von dem Verhältnis von Durchmesser und Länge des Werkstücks. Beschränkungen ergeben sich insbesondere bei der Herstellung von mehrgängigen Gewinden, deren Gewindegänge regelmäßig ein relatives großes Steigungsmaß haben, welches eine entsprechende Schwenkung der genannten Umlaufebene erfordern würde.

Insbesondere bei der Herstellung langer Innengewinde ist eine Abstützung des Zerspanungswerkzeugs auf der Innenfläche des Werkstücks erforderlich. Der das Zerspanungswerkzeug tragende Wirbeldorn ist zu diesem Zweck mit einem Führungsabschnitt versehen, der in Verbindung mit einem Kerndurchmesser eine radiale Abstützung bewirken soll, die zur Erzielung einer definierten Fertigungsgenauigkeit notwendig ist. Die Abstützung gestaltet sich jedoch bei der Herstellung mehrgängiger Gewindeprofile problematisch, weil sich die Stützverhältnisse insbesondere für den Fall des Abtrages des Innendurchmessers für den Führungsabschnitt mit der Herstellung eines jeden weiteren Gewindeganges verschlechtern. Dies kann in der Folge zu Vibrationen, Maßungenauigkeiten und einer verminderten Oberflächenqualität führen.

Wird bei der Herstellung eines mehrgängigen Innengewindes von der vorstehend beschriebenen Verfahrensart des "Innen-Hub-Wirbelns" Gebrauch gemacht, ergibt sich das weitere Problem, dass die Steigung des Gewindes mit steigender Gangzahl zunimmt, welches die Verwendung eines entsprechend großen Hubes erforderlich macht. Die technische Realisierung eines solchen Hubes erfordert besondere - Maßnahmen zur Beherrschung der hierbei auftretenden Massenkräfte.

Es ist vor diesem Hintergrund die Aufgabe der Erfindung, eine Vorrichtung der eingangs bezeichneten Art dahingehend auszugestalten, dass in einfacher Weise unter Vermeidung der dem vorstehend geschilderten Stand der Technik eigenen Nachteile eine Herstellung auch mehrgängiger Gewinde bzw. gewindeartiger Profile in der Innenfläche eines Werkstücks unter Zugrundelegung einer hohen, reproduzierbaren Oberflächenqualität und vertretbarer Fertigungszeiten möglich ist. Gelöst ist diese Aufgabe bei einer solchen Vorrichtung durch die Merkmale des Kennzeichnungsteils des Anspruchs 1.

Erfindungswesentlich ist hiernach eine Synchronisierung der Rotationsbewegungen des Werkstücks um dessen Achse sowie des Zerspanungswerkzeugs um die Achse seiner kreisförmigen Umlaufbahn, und zwar mit der Maßgabe, dass - bezogen auf eine Umdrehung des Werkstücks - der Eingriff des Zerspanungswerkzeugs mit dem Werkstück bei wenigstens einem Teil der herzustellenden Gänge des Profiles nacheinander erfolgt, so dass - entlang der Achse des Werkstücks gesehen - eine wählbare Anzahl an Gängen des Profils kontinuierlich hergestellt wird. Das Zerspanungswerkzeug unterliegt hierbei in herkömmlicher Weise einer Vorschubbewegung in Richtung der Achse des Werkstücks. Hieraus ergibt sich der wesentliche Vorteil, dass mehrere Gänge in einem einheitlichen Arbeitsgang herstellbar sind, so dass in Abkehr von dem eingangs dargelegten Stand der Technik die ansonsten mit der Herstellung eines jeden neuen Ganges notwendigen Positionier- und Ausrichtarbeiten entfallen und insgesamt eine deutliche Senkung der Fertigungszeit erreichbar ist.

Besondere Vorteile der Erfindung ergeben sich stets bei der Herstellung mehrgängiger Profile, die durch eine hohes Steigungsmaß gekennzeichnet sind.

Entsprechend den Merkmalen des Anspruchs 2 kann die Synchronisation der beiden Rotationsbewegungen mit der Maßgabe angelegt sein, dass die Herstellung sämtlicher Gänge des gewindeartigen Profils - entlang der Achse des Werkstücks gesehen - kontinuierlich folgt.

Die kontinuierliche Herstellung der Gänge des Profils bringt ferner den Vorteil mit sich, dass die Herstellung sämtlicher Gänge unter im Wesentlichen gleichen Temperaturbedingungen im Werkstück erfolgt, so dass die dem Stand der Technik eigenen, durch Temperaturunterschiede der nacheinander hergestellten Gänge bedingten Geometrieungenauigkeiten vermieden werden können.

Die Merkmale der Ansprüche 3 und 4 sind auf die Anwendung dieser Technik bei zwei unterschiedlichen Arten der Einstellung der Gewindesteigung bezogen. Die erfindungsgemäße technische Lehre ist hiernach sowohl für den Fall einer Verschwenkung der Umlaufebene des Zerspanungswerkzeugs relativ zu der Achse des Werkstücks als auch für den Fall des Hub-Wirbelns einsetzbar, bei welchem sich die Umlaufebene senkrecht zu der Achse des Werkstücks erstreckt.

Die Merkmale der Ansprüche 5 und 6 sind auf zwei unterschiedliche Varianten zur Synchronisation der Rotationsbewegungen des Zerspanungswerkzeugs einerseits und des Werkstücks andererseits gerichtet. Diese Synchronisation ist beispielsweise unter Nutzung einer numerischen Steuerung einschließlich zugehöriger Peripheriesysteme wie z.B. Winkelgeber und dergleichen darstellbar. Der besondere Vorteil dieser Ausführungsform liegt in der einfachen Programmierbarkeit, welche einfache Anpassungen an beispielsweise unterschiedliche Gangzahlen der herzustellenden Profile ermöglicht. Auch kann bei der Wahl der hierbei einzusetzenden elektronischen Komponenten auf marktübliche Elemente einer NC-Steuerung zurückgegriffen werden. Bei dieser letztgenannten Lösung sind somit zwei voneinander getrennte, den beiden Bewegungen jeweils zugeordnete Antriebe gegeben, deren Antriebsbewegungen drehwinkelgenau synchronisiert werden, und zwar nach Maßgabe eines vorzugsweise einstellbaren Drehzahlverhältnisses. Als Alternative hierzu kann jedoch auch ein Antrieb eingesetzt werden, der über ein Verzweigungsgetriebe unter Zugrundelegung eines definierten abtriebsseitigen Drehzahlverhältnisses die Synchronisation der beiden Rotationsbewegungen bewirkt. Das genannte Verzweigungsgetriebe sollte zweckmäßigerweise dahingehend eingerichtet sein, dass Änderungen des Übersetzungsverhältnisses möglich sind. Auch sollte eine drehwinkelgenaue Justierung der Abtriebsbewegungen des Getriebes möglich sein. Die letztgenannte mechanische Lösung ist zwar grundsätzlich möglich - in Anbetracht eines unvermeidbaren Getriebespiels wird jedoch mit Hinblick auf die erreichbare Fertigungsgenauigkeit der erstgenannten elektronischen Lösung auf der Basis einer NC-Steuerung der Vorzug gegeben.

In jedem Fall ist eine Steuerungseinheit vorgesehen, die zur Koordinierung der Rotationsbewegungen des Werkstücks und des Zerspanungswerkzeugs sowie gegebenenfalls einer axial angelegten Hubbewegung des Werkzeugs bestimmt ist.

Das Werkstück und das Zerspanungswerkzeug werden entsprechend den Merkmalen des Anspruchs 7 vorzugsweise im Gleichlauf betrieben.

Die Merkmale der Ansprüche 8 bis 10 sind auf eine konkrete Ausführungform auf der Grundlage des Innen-Hub-Wirbelns gerichtet. Man erkennt, dass die Stützwirkung, die von dem Führungsabschnitt des Wirbeldorns ausgeübt wird, sich bei sämtlichen der mehreren Gänge des Profils gleichförmig auswirkt, da sämtliche Gänge kontinuierlich hergestellt werden, wobei der Führungsabschnitt des Wirbeldorns in an sich bekannter Weise in Achsrichtung entlang einer Innenfläche einer Pilotbohrung des Werkstücks geführt wird, deren Durchmesser dem Kerndurchmesser entspricht. Dies führt zu einer erhöhten Fertigungsgenauigkeit. Der Wirbeldorn, der in einer Bohrung des Stützkopfes gelagert ist, überträgt die Drehbewegung auf das Zerspanungswerkzeug und gleichzeitig auch dessen Hubbewegung.

Alternativ hierzu kann entsprechend den Merkmalen des Anspruchs 11 die Hubbewegung durch die, aus dem Wirbeldorn und dem Stützkopf bestehende Baugruppe dargestellt werden.

Man erkennt anhand der vorstehenden Ausführungen, dass in der erfindungsgemäßen Vorrichtung ein hervorragendes Arbeitsmittel zur zerspanenden Herstellung von Innen- und Außengewindeprofilen beispielsweise auf der Grundlage der Wirbeltechnik bereitgestellt wird, welches ein rationelles Arbeiten bei gleichzeitig hoher Fertigungsgenauigkeit ermöglicht.

Die Erfindung wird im Folgenden unter Bezugnahme auf das in den Zeichnungen schematisch wiedergegebene Ausführungsbeispiel näher erläutert werden.

Es zeigen:

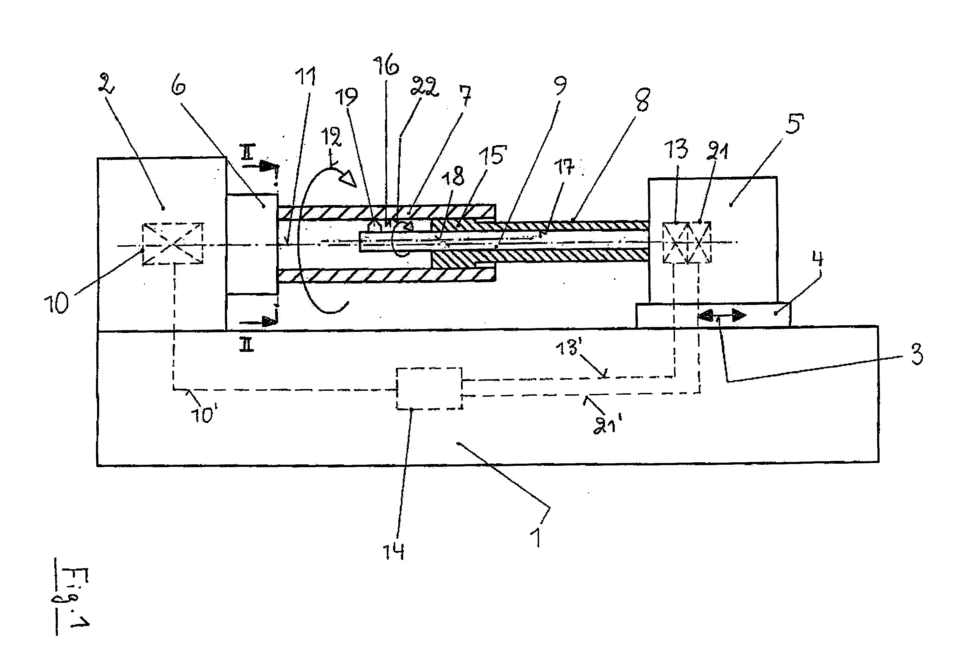

Fig. 1 eine Darstellung einer mit einem zur Innenprofilbearbeitung ausgerüsteten Wirbelaggregat versehenen Maschine in teilweisem Längsschnitt;
Fig. 2 eine vergrößerte Darstellung einer Teilansicht der Maschine entsprechend einer Schnittebene II-II der Fig. 1.

Mit 1 ist ein länggestrecktes ortsfest aufgestelltes Maschinenbett bezeichnet, dessen eines Ende eine Antriebseinheit 2 trägt. Ebenfalls auf dem Maschinenbett 1, und zwar in Richtung der Pfeile 3, somit in dessen Längsrichtung auf die Antriebseinheit 2 hin und von dieser fort beweglich aufgelagert ist ein Schlitten 4, der eine Werkzeugsantriebseinheit 5 trägt. Bei der Antriebseinheit 2 sowie der Werkzeugantriebseinheit 5 kann es sich um eine Spindeleinheit sowie ein Wirbelaggregat handeln.

Die Werkzeugantriebseinheit 5 ist zur Innenprofilbearbeitung eines, in dem Spannfutter 6 der Antriebseinheit 2 gehaltenen rohrartigen Werkstücks 7 eingerichtet und trägt dementsprechend einen in einem Stützkopf 8 geführtes Werkzeug, z.B. einen Wirbeldorn 9.

Das Spannfutter 6 ist mittels eines zeichnerisch angedeuteten Antriebs 10 um seine und damit die Achse 11 des Werkstücks 7 in Richtung des Pfeiles 12 drehend antreibbar. Der Antrieb 10 ist dahingehend angelegt, dass er eine drehzahl- und drehwinkelgetreue Rotation um die Achse 11 ermöglicht.

Der innerhalb der Werkzeugantriebseinheit 5 in an sich bekannter Weise gelagerte Wirbeldorn 9 ist mittels eines weiteren Antriebes 13 um eine zu der Achse 11 fluchtende Achse drehbar gelagert, wobei der Antrieb 13 ebenfalls dahingehend angelegt ist, dass er eine drehwinkel- und drehzahlgenaue Rotation des Stützkopfs 8 ermöglicht. Die Antriebe 10, 13 stehen jeweils über Steuerungsleitungen 10', 13' mit einer Steuerungseinheit 14 in Wirkverbindung. Hierauf wird im Folgenden noch näher eingegangen werden.

Der Stützkopf 8 weist an seinem freien, der Antriebseinheit 2 zugekehrten Ende einen zylinderischen Führungsabschnitt 15 auf, der auf der Innenfläche 16 des Werkstücks 7 in Richtung der Achse 11 gleitend geführt ist. Der Durchmesser dieser Innenfläche 16 entspricht dem Kerndurchmesser, von dem ausgehend - in radial auswärtiger Richtung - eine zerspanende Bearbeitung eingeleitet wird, und zwar mit dem Ziel, ein gewindeartiges Profil zu erzeugen.

Während dieser zerspanenden Bearbeitung übt der Führungsabschnitt 15 somit eine die Reaktionskräfte des Zerpanungsprozesses aufnehmende und weiterleitende Stützwirkung aus.

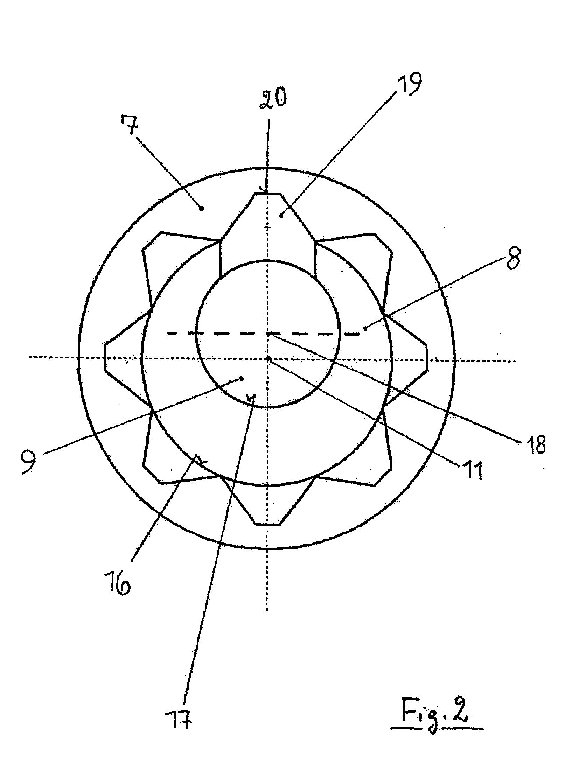

Wie insbesondere Fig. 2 erkennen lässt, ist der Wirbeldorn eine langgestrecktes, in einer, sich parallel und mit Abstand zu der Achse 11 verlaufenden Bohrung 17 des Stützkopfes 8 erstreckendes Bauelement, dessen Längsachse mit 18 bezeichnet ist.

Der Wirbeldorn 9 ist innerhalb der Bohrung 17 um seine Achse 18 drehbar und in Richtung dieser Achse verschiebbar gelagert, worauf im Folgenden noch näher eingegangen werden wird.

Mit 19 ist das Zerspanungswerkzeug bezeichnet, welches sich an dem, stirnseitig aus dem Stützkopf 8 herausragenden freien Ende des Wirbeldorns 9 befindet und sich bezüglich dessen Achse 18 global in radialer Richtung erstreckt.

Es besteht üblicherweise aus einem Werkzeughalter und einem, mit einem Hartmetallschneideinsatz bestückten Werkzeugkörper.

Das durch den Abstand der Achsen 11, 18 gegebene Maß einer Exzentrizität des Wirbeldorns 9 gegenüber der Achse 11 sowie der radiale Abstand des Scheitelpunktes 20 von der Achse 18, der den Flugkreis des Zerspanungswerkzeugs 19 um diese Achse bestimmt, sind mit der Maßgabe angelegt, dass bei einer vollständigen Umdrehung des Wirbeldornes 9 um die Achse 18 ein Eingriff des Zerspanungswerkzeugs in die Substanz des Werkstücks, nämlich in die Innenfläche 16 lediglich während eines Teiles dieses Flugkreises gegeben ist, ein für das Zerspanungsverfahren des Wirbelns charakteristischer Umstand.

Mit 21 ist ein weiterer, innerhalb der Werkzeugantriebseinheit 5 angeordneter Antrieb bezeichnet, der über eine Steuerungsleitung 21' mit der Steuerungseinheit 14 in Verbindung steht. Dieser Antrieb 21 ist zur Einleitung einer hin- und hergehenden Linearbewegung in Richtung der Achse 18 eingerichtet, somit parallel zu den Pfeilen 3.

Auf die Darstellung eines weiteren, der dargestellten Maschine zugehörigen Antriebs, der die Bewegung des Schlittens 4 entlang des Maschinenbettes bewirkt, ist aus Gründen der zeichnerischen Übersichtlichkeit verzichtet worden.

Die erfindungsgemäße Vorrichtung ist insbesondere zur Herstellung eines mehrgängigen Gewindeprofils in der Innenfläche 16 des Werkstücks 7 bestimmt. Fig. 2 zeigt beispielhaft die Darstellung eines achtgängigen Gewindes.

Der mittels dieser Vorrichtung abzuwickelnde Zerspanungsprozess resultiert - soweit es die Relativbewegungen zwischen dem Werkzeug und dem Werkstück betrifft - aus der Überlagerung der Rotationsbewegungen des Werkstücks 7 in Richtung des Pfeiles 12 um die Achse 11, der hierzu gleichläufigen Rotationsbewegung des Wirbeldornes 9 in der Richtung 22 um die Achse 18, einer periodischen Hubbewegung in Richtung der Achse 18 und schließlich einer Vorschubbewegung in Richtung der Achse 11, die über den nicht dargestellten Antrieb des Schlittens 4 bewirkt wird.

Erfindungswesentlich ist, dass die Rotationsbewegungen des Werkstücks 7 und diejenigen des Wirbeldorns 9 in Abstimmung mit der Zahl der Gänge des zu erstellenden Gewindeprofils mit der Maßgabe synchronisiert sind, dass - bezogen auf jeweils eine Umdrehung des Werkstücks der Zerspanungseingriff in die Innenfläche 16 teilungsgenau nach Maßgabe der zu erstellenden Gänge und unter Mitwirkung des Hubantriebs 21 zyklisch nacheinander erfolgt, so dass - bezogen auf die Achse 11 des Werkstücks 7 - die Zerspanung im Bereich sämtlicher herzustellender Gänge kontinuierlich abgewickelt wird. Die Steigung der Gewindegänge ergibt sich hierbei - wie an sich von der Technik des Hub-Wirbelns bekannt - aus dem Verhältnis der Umfangs- und der Axialgeschwindigkeit im Eingriffsbereich von Werkstück und Werkzeug.

Sowohl die Hublänge als auch die Hubgeschwindigkeit sind über die Steuerungseinheit 14 einstellbar. Einstellbar zueinander sind auch die Drehwinkel des Werkstücks 7 sowie des Wirbeldorns sowie deren Umdrehungsgeschwindigkeiten, so dass eine Anpassung an nahezu beliebige mehrgängige Gewindeprofile sowie Steigungsmaße gegeben ist.

## Patentansprüche

1. Vorrichtung zur zerspanenden Herstellung gewindeartiger Profile in der Innenfläche (16) eines, durch eine Antriebseinheit (2) gehaltenen und um seine Achse (11) drehend antreibbaren Werkstücks (7), mit einem zur Führung wenigstens eines Zerspanungswerkzeugs (19) eingerichteten, auf einem Maschinenbett (1) in Richtung auf die Antriebseinheit (2) hin bzw. von dieser fort zustellbar angeordneten Werkzeugantriebseinheit (5), wobei das Zerspanungswerkzeug (19) um eine zu der Achse (11) des Werkstücks (7) exzentrisch verlaufende Achse (18) mit der Maßgabe umlaufend angeordnet ist, dass es lediglich während eines Teiles seiner Umlaufbahn mit der zu zerspanenden Oberfläche in einen Eingriff gelangt, **dadurch gekennzeichnet, dass** zur Herstellung mehrgängiger gewindeartiger Profile in der zu zerspanenden Oberfläche die Drehzahlen und Drehwinkel des Werkstücks (7) um die Achse (11) sowie des Zerspanungswerkzeugs (19) um die genannte Achse (18) synchronisiert sind, so dass bei jeder Umdrehung des Werkstücks (7) der Eingriff des Zerspanungswerkzeugs (19) mit der genannten Oberfläche in Abhängigkeit von der Gangzahl des herzustellenden Profils nach Maßgabe solcher Drehwinkellagen und Häufigkeit nacheinander teilungsgenau eingerichtet ist, dass - entlang der Achse (11) des Werkstücks (7) gesehen - die Herstellung wenigstens eines Teiles der Gänge des Profils kontinuierlich erfolgt.

2. Vorrichtung nach Anspruch 1, **dadurch gekennzeichnet, dass** bei jeder Umdrehung des Werkstücks (7) der Eingriff des Zerspanungswerkzeugs (19) in der genannten Oberfläche nach Maßgabe solcher Drehwinkellagen und Häufigkeit nacheinander teilungsgenau eingerichtet ist, dass - entlang der Achse (11) des Werkstücks (7) gesehen - die Herstellung aller Gänge des herzustellenden Profils kontinuierlich erfolgt.

3. Vorrichtung nach Anspruch 1 oder 2, **dadurch gekennzeichnet, dass** die Umlaufbahn des Zerspanungswerkzeugs (19) in einer, zu der Achse (11) des Werkstücks (7) nach Maßgabe der Steigung des herzustellenden Profils geneigten Ebene angelegt ist.

4. Vorrichtung nach Anspruch 1 oder 2, **dadurch gekennzeichnet, dass** die Umlaufbahn des Zerspanungswerkzeugs (19) in einer zu der Achse (11) des Werkstücks (7) senkrechten Ebene angelegt ist und dass zur Darstellung der Steigung des herzustellenden Profils der Umlaufbewegung des Zerspanungswerkzeugs (16) eine in der Richtung der Achse (11) des Werkstücks (7) angelegte Hubbewegung überlagert ist.

5. Vorrichtung nach einem der vorangegangenen Ansprüche 1 bis 4, **dadurch gekennzeichnet, dass** zur drehzahl- und drehwinkelgetreuen Synchronisation der Rotationsbewegungen des Zerspanungswerkzeugs (19) und des Werkstücks (7) eine Steuerungseinheit (14) vorgesehen ist, die mit den, die genannten Rotationsbewegungen bewirkenden Antrieben (2) des Werkstücks und (13) des Zerspanungswerkzeugs (19) in Verbindung steht.

6. Vorrichtung nach einem der vorangegangenen Ansprüche 1 bis 4, **dadurch gekennzeichnet, dass** zur drehzahl- und drehwinkelgetreuen Synchronisation der Rotationsbewegungen des Zerspanungswerkzeugs (19) und des Werkstücks (7) ein Verzweigungsgetriebe vorgesehen ist, welches mit einem Antrieb in Verbindung steht, wobei das abtriebsseitige Drehzahlverhältnis nach Maßgabe des bereitzustellenden Drehzahlverhältnisses beider Rotationsbewegungen angelegt ist.

7. Vorrichtung nach einem der vorangegangenen Ansprüche 1 bis 6, **dadurch gekennzeichnet, dass** die Umdrehungsrichtungen des Zerspanungswerkzeugs (19) und des Werkstücks (7) gleichgerichtet sind.

8. Vorrichtung nach einem der vorangegangenen Ansprüche 1 bis 7, **dadurch gekennzeichnet, dass** für die Bearbeitung der Innenfläche (16) des Werkstücks (7) das Zerspanungswerkzeug (19) an dem freien Ende eines um seine Achse (18) drehbar in einem Stützkopf (8) gelagerten Wirbeldorns (9) angeordnet ist, wobei der Stützkopf (8) einen in Verbindung zumindest mit der Innenfläche (16) zur Ausübung einer Stützfunktion für das Zerspanungswerkzeug (19) eingerichteten Führungsabschnitt (15) aufweist.

9. Vorrichtung nach Anspruch 8, **dadurch gekennzeichnet, dass** sich der Stützkopf (8) koaxial zu der Achse (11) des Werkstücks (7) erstreckt und mit einer zu der Achse (11) exzentrischen, zur Aufnahme des Wirbeldorns (9) bestimmten Bohrung (17) versehen ist.

10. Vorrichtung nach Anspruch 8 oder 9, **dadurch gekennzeichnet, dass** der Wirbeldorn (9) mit einem, zur Darstellung einer Hubbewegung innerhalb der Bohrung (17) eingerichteten Antrieb (21) in Verbindung steht.

11. Vorrichtung nach Anspruch 8 oder 9, **dadurch gekennzeichnet, dass** die aus dem Wirbeldorn (9) und dem Stützkopf (8) bestehende Baugruppe mit einem, zur Darstellung einer Hubbewegung in der Richtung der Achse (18) des Wirbeldorns eingerichteten Antrieb in Verbindung steht.
